Europäisches Patentamt

(19) European Patent Office

Office européen des brevets

(11) Veröffentlichungsnummer: **0 093 923**
A1

# (12) EUROPÄISCHE PATENTANMELDUNG

(21) Anmeldenummer: 83103981.3

(22) Anmeldetag: 23.04.83

(51) Int. Cl.³: **F 16 L 59/12**, F 16 L 55/02,
F 16 F 15/00, E 04 B 1/82

(30) Priorität: 07.05.82 DE 8213227 U

(43) Veröffentlichungstag der Anmeldung: 16.11.83
Patentblatt 83/46

(84) Benannte Vertragsstaaten: AT BE CH DE GB LI LU NL

(71) Anmelder: RHEINHOLD & MAHLA Gesellschaft mit
beschränkter Haftung, Augusta-Anlage VKI-Haus,
D-6800 Mannheim 1 (DE)

(72) Erfinder: Hillen, Albert, Peter-Maeth-Strasse 6,
D-5480 Remagen (DE)
Erfinder: Dewald, Johannes, Dipl.-Ing.,
Sandackerstrasse 1, D-6941 Laudenbach (DE)

(74) Vertreter: Müller, Heinz-Gerd, Dipl.-Ing. et al, c/o Bayer
AG Zentralbereich Patente Marken und Lizenzen,
D-5090 Leverkusen 1, Bayerwerk (DE)

(54) Schallmindernde Wärmedämmung.

(57) Bei der schallmindernden Wärmedämmung eines Rohres bzw. Kanals (1) sind einzelne Halter (3) aus Mineralfaser zwischen der Wandung (2) des Rohres bzw. Kanals (1) und der Wärmedämmschicht (6) eingebaut.

0093923

Rheinhold & Mahla GmbH

6800 Mannheim 1,Augusta-
Kr/by-c                    Anlage


Schallmindernde Wärmedämmung
_____


Die Neuerung betrifft eine schallmindernde Wärmedämmung
für einen Kanal bzw. Rohr bestehend aus einem Wärmedämmstoff, der einen Außenmantel trägt.

Bei hohen Gasgeschwindigkeiten in Kanälen sowie bei Förderung von Fluiden und/oder Feststoffen in Rohren treten
Lärmbelästigungen auf, die die Umwelt belasten. Bei
Leitungen mit heißer Ware ist darüber hinaus zwecks
Energieeinsparung eine Wärmedämmung erforderlich.

Bekannt sind Wärmedämmungen, bei denen feste ringförmige
Abstandshalter den Außenmantel in einem festen Abstand
von Rohr halten, wobei der Zwischenraum mit Mineralwolle ausgefüllt ist.

Der Nachteil dieser Konstruktion besteht darin, daß der
Schall schon bei normalen Anforderungen nicht genügend
gedämmft wird. Außerdem muß die Schale gegen äußere Lasten steif ausgebildet werden, da sie nur das Einzelelement zwischen den Abstandshaltern trägt.

Weiter sind Abstandshalter für eine als Umhüllung ver-


RM 469 -EP

wendete Wärme- und Schalldämmschicht bekannt, die aus in Richtung der Flächennormalen bestehenden Keramikstiften bestehen, welche an der Rohrseite durch einen umlaufenden Stützring und am entgegengesetzt liegenden Schutzmantel durch eine Feder gehalten werden, die in tangentialer Richtung härter als in radialer Richtung ausgelegt ist.

Durch den unmittelbaren Kontakt schalleitender Materialien wird Körperschall auf den Schutzmantel übertragen, so daß allein schon aus diesem Grunde die Schalldämmung gering ist. Außerdem ist die Konstruktion aufwendig und die Montage wegen der unterschiedlichen Flexibilität in verschiedenen Richtungen schwierig.

Der Neuerung liegt die Aufgabe zugrunde, eine Wärmedämmung mit hoher Schalldämmung zu finden, die sich durch einfachen Aufbau auszeichnet, sich leicht montieren läßt und einen guten Schutz gegen äußerer mechanischer Beanspruchung bietet.

Die Aufgabe wird neuerungsgemäß dadurch gelöst, daß einzelne schalldämmende Halter eine Unterkonstruktion im Abstand von der Wandung des Kanals halten, die wiederum die Wärmedämmschicht mit Außenmantel trägt.

Dieser Aufbau hat den Vorteil, daß keine unmittelbare Leitung von Schall und Wärme zwischen den leitenden Elementen vorhanden ist und daß trotzdem die Konstruktion durch die Verbundwirkung der festen Unter-

RM 469

konstruktion und des geschlossenen Außenmantels sehr steif ist. Außerdem ist die Wärmedämmung sowohl vor Ort aus einzelnen Teilen wie auch aus in der Werkstatt aus vorgefertigten Halbschalen einfach zu montieren. Weiter kann der Hohlraum für eine Begleitheizung genutzt werden.

In einer besonderen Ausführungsform besteht der Halter aus einem Mineralfaserkörper, dessen Erweichungstemperatur größer als 550°C bei einer flächenbezogenen Belastung von 1 kN/m$^2$ ist.

Durch diese hochfeste Mineralwolle, die unter der Firmenbezeichnung Pargas vertrieben wird, ist es möglich hohe spezifische Belastungen bei hohen Temperaturen aufzunehmen, so daß nur kleine Querschnitte zur Aufnahme der anfallenden Belastungen notwendig sind.

In einer weiteren Ausführungsform ist der Halter mit viereckigem Querschnitt um das Rohr legbar.

Wenn beispielsweise der Halter als Ring mit viereckigem Querschnitt ausgebildet ist, läßt er sich schnell und einfach über das Rohr schieben. Durch Vorgabe einer geringen Vorspannung bleibt er während der Montage unverschiebbar liegen.

In einer anderen Ausführungsform ist die Unterkonstruktion eine Schale.

Anstelle einer Netzwerks-Konstruktion kann auch eine ge-

RM 469

- 4 -

schlossene Schale eingebaut werden, die aus Blech, anorganischen Stoffen oder Kunststoffen bestehen kann. Hierdurch wird eine Verunreinigung des Zwischenraumes zwischen Rohr und Schale ausgeschlossen. Auch kann im Falle der Leckage der Zwischenraum zum Auffangen des Medium verwendet und an Kontrollpunkten abgeführt werden, was besonders vorteilhaft bei gefährlichen Fluiden ist.

In einer vorteilhaften Ausführungsform besitzt die Schale Durchbrüche.

Bei Einsatz eines Lochbleches verliert die Schale kaum an Festigkeit, dagegen wird die Schallenergie besser - wie an.gestrebt - in Wärmeenergie umgewandelt.

In einer möglichen Ausführungsform treten Teile der Schale aus der eigentlichen Schalenmittelebene heraus.

Durch teilweise herausgeklappte Stanzausschnitte sowie durch vertiefte Strukturen werden die Schallwellen diffus reflektiert, so daß als Folge der Lärmpegel sinkt, was besonders bei hohen Frequenzen von Vorteil ist.

In einer Ausführungsform ist der Zwischenraum, der durch Kanalwandung, Halter und Unterkonstruktion gebildet wird, durch Mineralwolle ausgefüllt.

Durch die zusätzliche Mineralwolle wird ein Teil der Schallenergie absorbiert.

RM 469

- 5 -                                    0093923

Selbstverständlich ist es auch möglich, mehrere Systeme gemäß obiger Erfindung hintereinander zu schalten. Ebenfalls ist es denkbar, daß anstelle von Mineralwolle anderes Wärmedämmmaterial, vor allem bei geringen Temperaturen, verwendet wird. Dabei hat es sich als zweckmäßig erwiesen, daß die Breite (in Richtung der Rohrachse gemessen) des Halters mindestens gleich oder größer als die (radiale) Höhe ist. Die Druckfestigkeit der Mineralfaser sollte bei einer Stauchung von 10 % mindestens 25 $kN/m^2$ insbesondere mindestens 40 $kN/m^2$ betragen.

Ein Beispiel der Erfindung ist in der Zeichnung dargestellt und wird nachstehend beschrieben. Es bedeuten

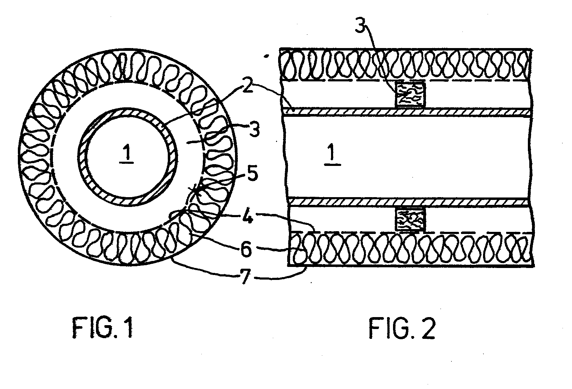

Fig. 1      Querschnitt durch Rohr und Wärmedämmung
Fig. 2      Längsschnitt durch Rohr und Wärmedämmung

Das Medium-führende Rohr 1 besitzt eine Wandung 2, auf die in Abständen ringförmige Halter 3 aus Mineralwolle mit recheckigem Querschnitt aufgesetzt sind, die als Unterkonstruktion 4 eine Schale aus gebogenen mittels Schrauben 5 zusammengehaltenes Lochblech tragen, welches wiederum von einer Mineralwollmatte 6 mit Außenmantel 7 aus Blech umgeben ist.

RM 469

0093923

Schutzansprüche:

1.  Schallmindernde Wärmedämmung für einen Kanal bzw. Rohr bestehend aus einem Wärmedämmstoff der einen Außenmantel trägt, dadurch gekennzeichnet, daß einzelne schalldämmende Halter (3) eine Unterkonstruktion (4) im Abstand von der Wandung (2) des Kanals (1) halten, die wiederum den Wärmedämmschicht (6) mit Außenmantel (8) trägt.

2.  Schallmindernde Wärmedämmung nach Anspruch 1, dadurch gekennzeichnet, daß der Halter (3) aus einem Mineralfaserkörper besteht, dessen Erweichungstemperatur größer als 550°C bei einer flächenbezogenen Belastung von 1 KN/m$^2$ ist.

3.  Schallmindernde Wärmedämmung nach Anspruch 1 und 2, dadurch gekennzeichnet, daß der umlaufende Halter (3) mit viereckigem Querschnitt um das Rohr (1) legbar ist.

4.  Schallmindernde Wärmedämmung nach Anspruch 1 bis 3, dadurch gekennzeichnet, daß die Unterkonstruktion (4) eine Schale ist.

5.  Schallmindernde Wärmedämmung nach Anspruch 4, dadurch gekennzeichnet, daß die Schale (4) Durchbrüche besitzt.

RM 469

6. Schallmindernde Wärmedämmung nach Anspruch 4, dadurch gekennzeichnet, daß Teile der Schale (4) aus der eigentlichen Schalenmittelebene heraustreten.

7. Schallmindernde Wärmedämmung nach Anspruch 1 bis 6, dadurch gekennzeichnet, daß der Zwischenraum der durch Kanalwandung (2), Halter (3) und Unterkonstruktion (4) gebildet wird, durch Mineralwolle ausgefüllt ist.

FIG. 1

FIG. 2

| | EINSCHLÄGIGE DOKUMENTE | | EP 83103981.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | FR - A1 -2 441 692 (INGEMANSSONS)<br>  * Fig. 4-6 *<br>  -- | 1,3,4,5 | F 16 L 59/12<br>F 16 L 55/02<br>F 16 F 15/00<br>E 04 B  1/82 |
| A | EP - A1 -  0 015 642 (IMPERIAL CHEMICAL INDUSTRIES LTD)<br>  * Fig. 1 *<br>  -- | 1,4,5 | |
| A | DE - A1 - 2 812 680 (KAEFER ISOLIERTECHNIK GMBH & CO KG)<br>  * Gesamt *<br>  -- | 1 | |
| A | DE - A1 - 2 521 119 (GRÜNZWEIG & HARTMANN UND GLASFASER AG)<br>  * Gesamt *<br>  -- | 1 | |
| A | EP - A2 - 0 036 032 (KABEL- UND METALLWERKE GUTEHOFFNUNGSHÜTTE AKTIENGESELLSCHAFT)<br>  * Gesamt *<br>  ---- | 1,3 | RECHERCHIERTE SACHGEBIETE (Int. Cl. ³)<br><br>F 16 L 55/00<br>F 16 L 59/00<br>F 16 F 15/00<br>E 04 B  1/70<br>E 04 B  1/80 |

Der vorliegende Recherchenbericht wurde für alle Patentansprüche erstellt.

| Recherchenort | Abschlußdatum der Recherche | Prüfer |
|---|---|---|
| WIEN | 13-07-1983 | SCHUGANICH |